# EUROPEAN PATENT SPECIFICATION

(11) **EP 2 028 789 B1**
(45) Date of publication and mention of the grant of the patent: **07.09.2011**
(21) Application number: 07721387.4
(22) Date of filing: 08.06.2007
(51) Int. Cl.: H04L 12/24

(54) **METHOD, SYSTEM AND APPARATUS FOR ALLOCATING LABEL**
VERFAHREN, SYSTEM UND VORRICHTUNG FÜR ETIKETTZUWEISUNG
PROCÉDÉ, SYSTÈME ET APPAREIL D'AFFECTATION D'ÉTIQUETTES

(30) Priority: 09.06.2006 CN 200610061050
(43) Date of publication of application: 25.02.2009
(73) Proprietor: Huawei Technologies Co., Ltd., Shenzhen, Guangdong Province 518129 (CN)
(72) Inventor: JIANG, Zhangzhen, Guangdong 518129 (CN); HE, Jia, Guangdong 518129 (CN)
(74) Representative: Hengelhaupt, Jürgen
(86) International application number: PCT/CN2007/001814
(87) International publication number: WO 2007/143929

(56) References cited:
- EP-A- 1 592 183
- CN-A- 1 371 202
- CN-A- 1 567 824
- US-A1- 2005 169 270
- US-B2- 6 839 348
- ALI BOUDANI ET AL: "An Effective Solution for Multicast Scalability: The MPLS Multicast Tree (MMT); draft-boudani-mpls-multicast-tree-05.txt" IETF STANDARD-WORKING-DRAFT, INTERNET ENGINEERING TASK FORCE, IETF, CH, no. 5, 1 March 2004 (2004-03-01), XP015011059 ISSN: 0000-0004
- YANG B ET AL: "Multicasting in MPLS domains" COMPUTER COMMUNICATIONS, ELSEVIER SCIENCE PUBLISHERS BV, AMSTERDAM, NL, vol. 27, no. 2, 1 February 2004 (2004-02-01), pages 162-170, XP004484620 ISSN: 0140-3664
- OOMS D ET AL: "Framework for IP Multicast in MPLS (draft-ietf-mpls-multicast-01.txt)" NETWORK WORKING GROUP INTERNET DRAFT, XX, XX, 1 May 2000 (2000-05-01), pages 1-28, XP002251077
- ACHARYA ET AL: "IP multicast Support in MLPS networks" IETF INTERNET DRAFT, XX, XX, 23 February 1999 (1999-02-23), pages 1-26, XP002289485
- OOMS D ET AL: "MPLS Multicast Traffic Engineering; draft-ooms-mpls-multicast-te-01.txt" IETF STANDARD-WORKING-DRAFT, INTERNET ENGINEERING TASK FORCE, IETF, CH, no. 1, 1 February 2002 (2002-02-01), XP015004704 ISSN: 0000-0004
- WU L ET AL: "MPLS Multicast Traffic Engineering (draft-wu-mpls-multicast-te-00.txt)" NETWORK WORKING GROUP INTERNET DRAFT, XX, XX, 1 June 1999 (1999-06-01), pages 1-11, XP002251076
- SEISHO YASUKAWA NTT CORPORATION ADRIAN FARREL OLD DOG CONSULTING: "Support of LDP Multicast Label Switched Paths over Point-to-Multipoint Label Switched Path Tunnels and on Multi-Access Links; draft-yasukawa-mpls-ldp-mcast-over-p2mp-ls ps-01.txt" IETF STANDARD-WORKING-DRAFT, INTERNET ENGINEERING TASK FORCE, IETF, CH, no. 1, 1 October 2005 (2005-10-01), XP015043154 ISSN: 0000-0004

## Description

### Field of the Invention

This invention relates to the multicast technology field, in particular, to a method, system and apparatus for distributing labels.

### Background of the Invention

Multicast, which helps to improve the bandwidth utilization and save network resources, is a technology used to transfer messages between a sender and more than one receiver. When a unicast service needs to pass through an operator's network, the usual practice is to put the service in a tunnel for transmission. Therefore, a multicast service may be carried over a point-to-multi-point (P2MP) tunnel. For example, a multicast service may be carried over a Resource ReSerVation Protocol -Traffic Engineering ( RSVP-TE) P2MP Label Switched Path (LSP) or over the Label Distribution Protocol (LDP) P2MP LSP. During multicast, one multicast packet is transferred, and is replicated by using multicast bearer technology and sent to all multicast receivers. Based on features of multicast services, the Label Switching Routers (LSRs) of all next hops process the same label, which may result in label conflict.

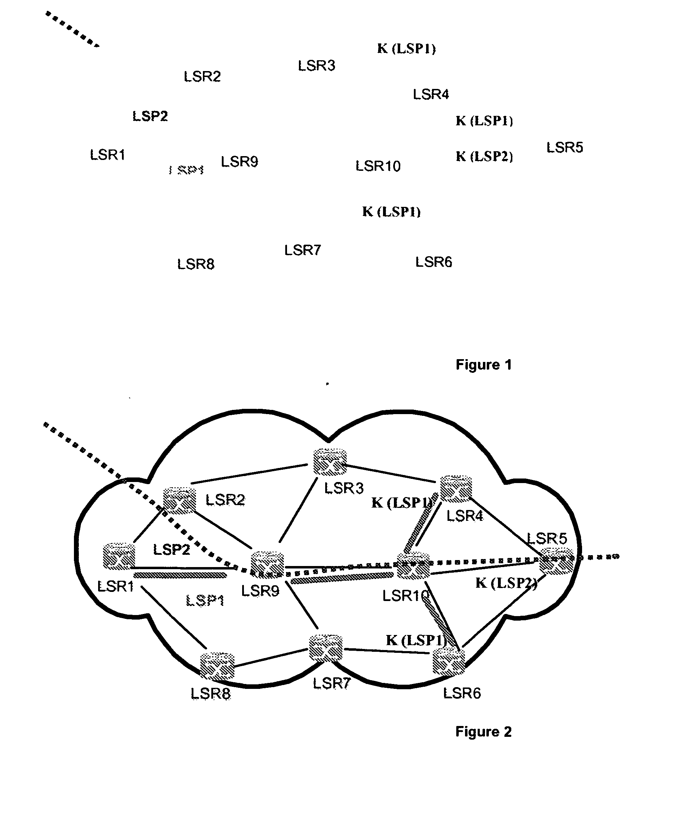

Figure 1 shows a case in which unicast labels conflict with multicast labels. Multicast LSP1 indicated by the thick solid lines (LSR1-LSR9-LSR10-LSR4, LSR5, LSR6) distributes the same label, that is, label K, for LSR4, LSR5 and LSR6. As the label distribution process is independent,

when unicast LSP2 (that is, LSR2-LSR9-LSR10-LSR5 indicated by the dotted line) is established, label K may also be distributed for LSR5. In this case, a label conflict arises between multicast LSP1 and unicast LSP2. When the services of the two LSPs arrive at LSR5, due to the same label for LSR5, LSR5 is unable to distinguish which LSP the services belong to based on the prior art, thus affecting subsequent forwarding. To solve this problem, the current practice is to distribute another label for unicast LSP2 through signaling such as LDP.

Figure 2 shows another case in which unicast labels conflict with multicast labels. The thick solid lines indicate multicast LSP1 (that is, LSR1-LSR9-LSP10-LSR4, LSR6), and the dotted lines indicate unicast LSP2 (that is, LSR2-LSR9-LSR10-LSR5). Multicast LSP1 uses label K for LSR4 and LSR6, and unicast LSP2 also distributes label K for LSR5. In this case, suppose LSR5 on LSP2 wishes to join LSP1, which requires that all the next-hop multicast LSRs process the same label, that is, LSR4, LSR6 and LSR5 all use label K. Because label K is already occupied by LSP2, the label conflict described above arises. At present, this problem cannot be solved.

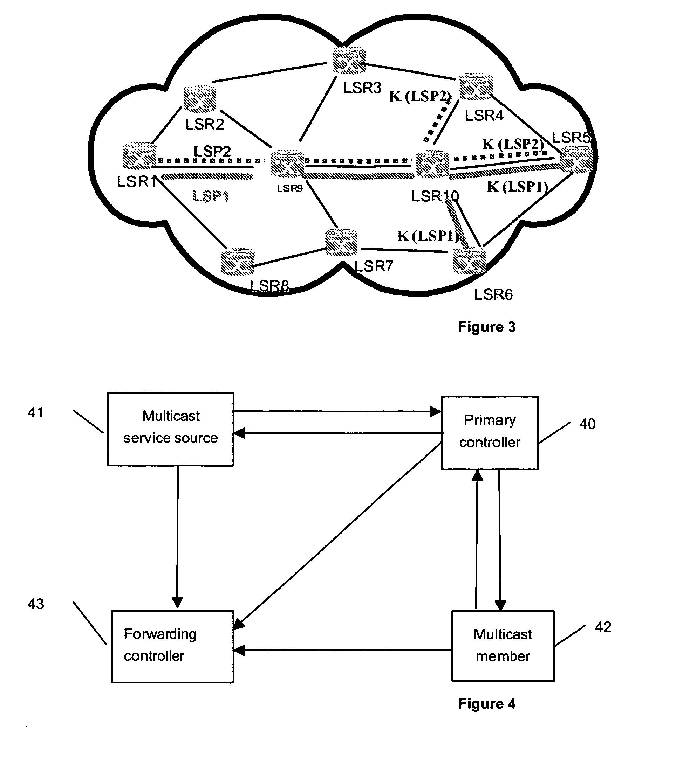

Figure 3 shows a case in which multicast labels conflict with multicast labels. The thick solid lines indicate multicast LSP1, and the dotted lines indicate multicast LSP2. Because label distribution is an independent process, the same label, that is, label K, is distributed by both LSP1 and LSP2. As a result, a label conflict arises. At present, this problem cannot be solved by the prior art.

When the label conflict shown in Figure 1 occurs, the solution based on the prior art is to acquire another label by using complicated signaling. This method, however, is unable to solve the problems described in Figure 2 and Figure 3. Therefore, it cannot solve label conflicts ultimately.

The related art:
ALI BOUDANI ET AL:" An Effective Solution for Multicast Scalability : The MPLS Multicast Tree (MMT); draft-boudani-multicast-tree-05. txt" IETF STANDARD-WORKING-DRAFT, INTERNET ENGINEERING TASK FORCE, IETF, CH, no, 5, 1 March 2004, XP015011059 ISSN:0000-0004, discloses a new approach, the MPLS Multicast Tree (MMT), which utilizes MPLS LSPs between multicast tree branching node routers in order to reduce forwarding states and enhance scalability. Only routers that are acting as multicast tree branching node routers for a group need to keep forwarding state for that group. All other non-branching node routers simply forward data packets by traffic engineered unicast routing using MPLS LSPs.
YANG B ET AL:" Multicasting in MPLS domains" COMPUTER COMMUNICATIONS, ELSEVIER SCIENCE PUBLISHERS BV, AMSTERDAM, NL, vol, 27, no.2, 1 February 2004, pages 162-170, XP004484620 ISSN: 0140-3664, discloses an edge router multicasting (ERAM) scheme by limiting branching point of multicast delivery tree to only the edges of MPLS domains. As a result, multicast LSP setups multicast flow assignments, and multicast traffic aggregation are reduced to unicast problems. The first approach is based on modifications to the existing multicast protocols, while the second approach applies Steiner tree-based heuristic routing algorithm in the edge router multicasting environment.
OOMS D ET AL:" Framework for IP Multicast in MPLS (draft-ietf-mpls-multicast-01. txt) " NETWORK WORKING GROUP INTERNET DRAFT, XX, XX, 1 May 2000 (2000-05-01), pages 1-28, XP002251077, discloses that a framework for IP multicast deployment in an MPLS environment. Issues arising when MPLS techniques are applied to IP multicast are overviewed. The pros and cons of existing IP multicast routing protocols in the context of MPLS are described and the relation to the different trigger methods and label distribution technologies are listed. Both point-to-point and multi-access networks are considered.
US 2005/169270 A1 discloses that in an MPLS network, multicast, broadcast and address learning belonging to the layer 2 functions are realized. An ingress router comprises a frame receiving unit, a determining unit, a first frame transmitting unit, a physical address table for multicast, a label switching unit, a tunnel label table, a VCID giving unit, a L2 header creating unit and a second frame transmitting unit. The load on the network is suppressed, the band is efficiently used, and wasteful frame duplication and frame forwarding between edge routers are avoided.
ACHARYA ET AL:" IP multicast Support in MPLS networks" IETF INTERNET DRAFT, XX, XX, 23 February 1999 (1999-02-23), pages 1-26, XP002289485, discloses both dense-mode and sparse-mode IP multicast within the context of a MPLS network. Unlike unicast routing, dense-mode multicast routing trees are established in a data-driven manner and it is not possible to topologically aggregate such trees, which are rooted at different sources. In sparse-mode multicast, source-specific trees may coexist with a core/shared tree, and it is not possible to assign a common label to traffic from different sources on a branch of the shared tree. This leads us to suggest a per-source traffic-driven label allocation scheme for supporting all three types of multicast (dense mode, shared tree, source tree) routing trees in a MPLS network.
OOMS D ET AL:" MPLS Multicast Traffic Engineering; draft-ooms-mpls-multicast-te-01.txt:" IETF STANDARD-WORKING-DRAFT, INTERNET ENGINEERING TASK FORCE, IETF, CH, no.1, 1 February 2002 (2002-02-01), XP015004704 ISSN:0000-0004, discloses that there are several reasons for operators to construct multicast trees by another means than multicast routing protocols. This document lists these reasons and describes 2 ways of building a multicast traffic-engineered tree; root-initiated tree and leaf-initiated tree. Finally it defines extensions to CR-LDP to support MPLS multicast traffic engineering.
WULL ET AL:" MPLS Multicast Traffic Engineering (draft-wu-mpls-multicast-te-00.txt)" NETWORK WORKING GROUP INTERNET DRAFT, XX, XX, 1 June 1999 (1999-06-01), pages 1-11, XP002251076, discloses that one method, MPLS multicast traffic engineering, which can be used to manage multicast traffic in a core ISP backbone network.
SEISHO YASUKAWA NTT CORPORARION ADRIAN FARREL OLD DOG CONSULTING:" Support of LDP Multicast Label Switched Paths over Point-to-Multipoint Label Switched Path Tunnels and on Multi-Access Links; draft-yasukawa-mpls-ldp-mcast-over-p2mp-ls ps-01.txt: IETF STANDARD-WORKING-DRAFT, INTEFNET ENGINEERING TASK FORCE, IETF, CH, no. 1, 1 October 2005 (2005-10-01), XP015043154 ISSN: 0000-0004, discloses that Multiprotocol Label Switching (MPLS) includes the facility to provision point-to-multipoint (P2MP) Traffic Engineered (TE) Label Switched Paths (LSPs) which can be used to construct P2MP tunnels across MPLS networks. The Label Distribution Protocol (LDP) has also been extended to support label distribution for multicast traffic by forming multicast LSPs. When traffic for a user network is carried across a probider network, it is common practice for the traffic the traffic to be placed in tunnels. This document examines the requirements to carry multicast LDP traffic across a provider network within P2MP MPLS tunnels, and introduces solution models that meet those requirements. Note that the requirements and solutions discussed in this document are also applicable to the use of multicast LDP on multi-access networks.

EP-A-1 592 183 (NIPPON TELEGRAPH & TELEPHONE[JP]) 2 November 2005 (2005-11-02), discloses that a method of establishing a multicast transfer route includes the steps of: computing the shortest route with respect to delay connecting the starting point and the plural ending points based on measurement result; computing delay from a node on the shortest route to each ending point and the greatest delay; removing, if the greatest delay satisfies a delay condition, the greatest-cost route from the shortest route in accordance with selection criteria effective for cost trees; and establishing separately computed route as a complementary route that complement the removed route for connecting the two route trees.

CN 1567824(A) discloses that a protocol for universal label allocation between network nodes in communication field, where the universal label is arbitrary identification, such as MPLS label, IP address, any ID, etc; adopting: a. client/server mode; b. dynamic label automatically-allocating operating mode of label-allocation algorithm is a request-answer mode; the requirement of label allocation is unique in the whole network or subnet, one network node can allocated with many labels; one network can have many label spaces.

CN1371202 (A) discloses that transmitting method of data packet and a network exchanger containing multi connecting ports, a label exchange ruling table, a multi-casting cross-reference list, a virtual local area network cross-reference list and a label setting device, composed of receiving a data packet according to the multi-cast information, label exchange ruling table and virtual local area network cross-reference list, a multi-cast port mask, a label exchange rule and a label additional rule correspondingly. Said data packet is transmitted via the connects port in opposite of said multi-cast port mask, and optionally adding the relating virtual local area network label to the data packet in accordance with the label addition rule and label exchange rule.

US 6839348( B2) discloses that a system and method for efficiently distributing multicast messages within computer networks configured to have one or more virtual local area network (VLAN) domains. A multicast network device (MND), having a plurality of interfaces, includes a multicast controller for efficiently distributing multicast messages among subscribing entities associated with various VLAN domains. The multicast controller, which is in communicating relationship with the interfaces, includes a VLAN assignment engine for assigning responsibility for the VLAN domains to the extent there are multiple MNDs.; The multicast controller also accesses a multicast tag source to establish a plurality of novel VLAN tags for efficiently distributing multicast messages, including a sub-regional Multicast VLAN Identifier (MVLAN-ID) that encompasses all of the VLAN domains for which the respective MND is responsible, and one or more color-limited MVLAN-IDs that encompass all of the VLAN domains for which the MND is responsible except for one. The multicast controller then tags multicast messages with its sub-regional or a color-limited MVLAN-ID depending on whether the message is considered internal or external by the respective MND. The tagged messages are then forwarded for distribution to the subscribers associated with the various VLAN domains.

### Summary of the Invention

An embodiment of this invention provides a method, system and apparatus for distributing labels so as to effectively avoid the conflicts between multicast services and between multicast services and unicast services.

For this purpose, the embodiment of this invention provides the following technical solution:
A method for distributing labels includes:
   obtaining, by a primary controller, a request containing a multicast service ID for applying a label from a multicast service source, the primary controller is deployed in a network to manage the label space on a centralized basis;
   querying, by the primary controller, a label information table which the primary controller maintains;
   distributing, by the primary controller, an unused label for a multicast service; and updating, by the primary controller, the label information table.

An apparatus for distributing labels, the apparatus is deployed in a network to manage a label space on a centralized basis, configured to maintain and manage a label information table, distribute a label from the label information table for a multicast service based on a request for applying a label from a multicast service source, includes:
a message interaction unit, configured to obtain a request containing a multicast service ID for applying a label from a multicast service source;
an information maintenance unit, configured to maintain and manage a label information table; and
a label distribution unit, configured to select an unused label from the label information table when the message interaction unit obtains a request for applying a label from the multicast service source, distribute the unused label to a multicast service, send the distributed label to the message interaction unit, and send a notification for updating the label information table to the information maintenance unit.

An embodiment of this invention manages the label space on a centralized basis. It maintains and manages label information by using the label information table and ensures that unicast and multicast services use different labels by using the primary controller to distribute labels. In addition, the primary controller may query labels for multicast members, avoiding conflicts between unicast labels and multicast labels and between multicast labels.

### Brief Description of the Drawings

Figure 1 shows a case in which unicast labels conflict with multicast labels in the prior art;
Figure 2 shows another case in which unicast labels conflict with multicast labels in the prior art;
Figure 3 shows a case in which multicast labels conflict with multicast labels in the prior art;

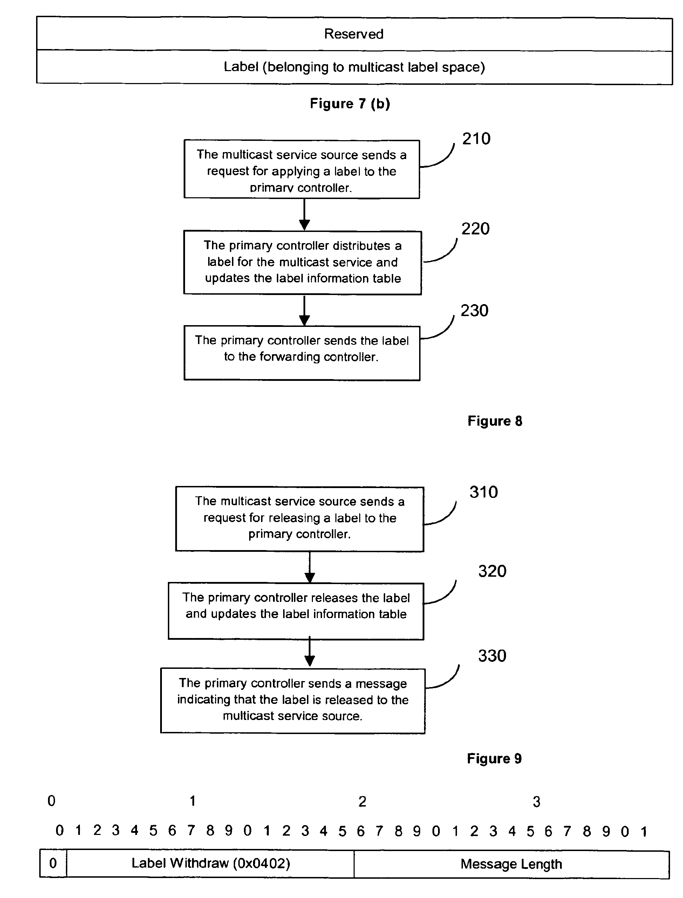

Figure 8 shows another embodiment of this invention in which the multicast service source requests a label;
Figure 9 shows an embodiment of this invention in which a label is released;

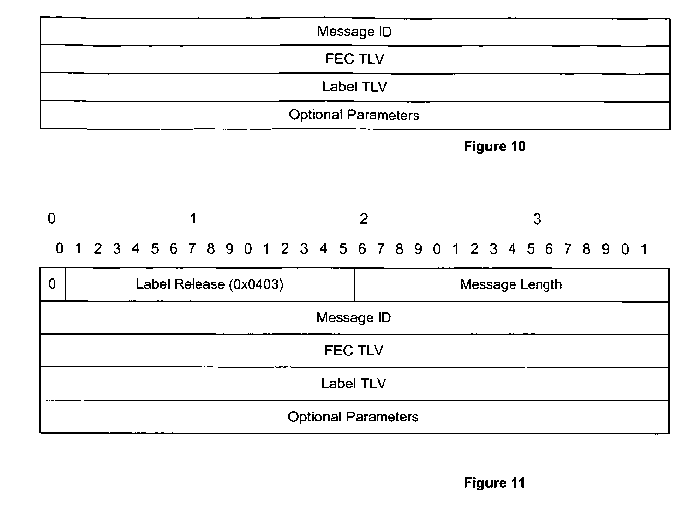

Figure 10 shows the format of an LDP request for releasing a label in an embodiment of this invention;
Figure 11 shows the format of the label release message in an embodiment of this invention;

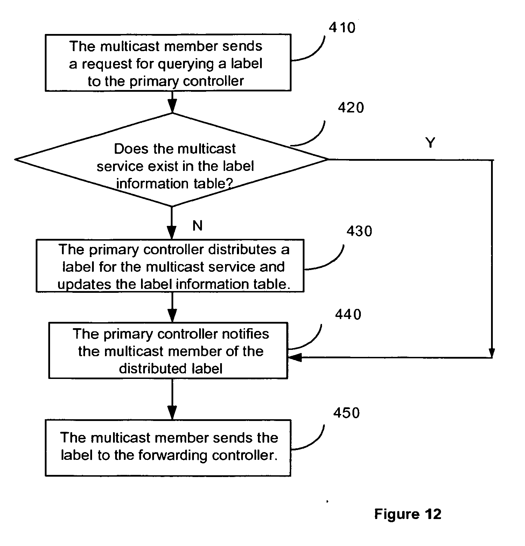

Figure 12 shows an embodiment of this invention in which a multicast member queries a label;

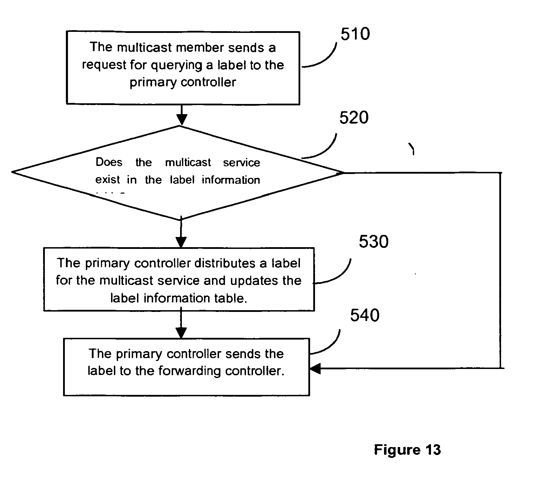

Figure 13 shows a second embodiment of this invention in which a multicast member queries a label;

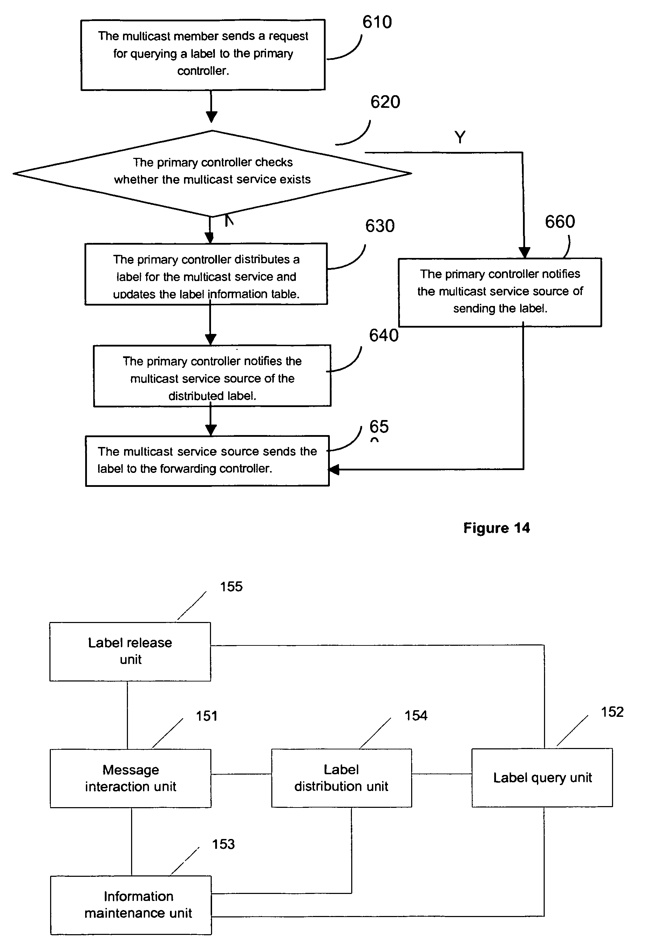

Figure 14 shows a third embodiment of this invention in which a multicast member queries a label; and
Figure 15 shows the principle block diagram of an embodiment of this invention.

### Detailed Description of the Invention

An embodiment of this invention manages the label space on a centralized basis by deploying a primary controller in the network, maintains and manages label information by using the label information table. A method is to make the labels in the label information table distributable for unicast and multicast services and ensure that unicast and multicast services use different labels by management; in other words, the label distributed for a unicast service cannot be used by multicast services and the label distributed for a multicast service cannot be used by unicast services. Another method is to use the labels in the label information table for multicast services, but not for unicast services; for example, a range of labels may be specified and the labels in the range may be recorded, managed and maintained by using the label information table. The labels described here refer to global labels, that is, the labels in the whole network.

In the preceding first method, the label information table may record the usage states of all labels in the whole label space. When Flag is 1, the label is in use; when Flag is 0, the label is not in use. For a label whose Flag is 1, if the Multicast Service ID entry of the label has a value, for example, ID 1 in Table 1, the label is distributed for a multicast service; otherwise, if the Multicast Service ID entry of the label does not have a value, for example, Null in Table 1, the label has been used for a unicast service.

**Table 1**

| Label | Flag | Multicast Service ID |
|---|---|---|
| 001 | 1 | ID 1 |
| 002 | 1 | Null |
| 003 | 0 | Null |
| ... | ... | ... |

In the preceding second method, the labels in the label information table are used for multicast services only. For example, a range of labels may be specified to differentiate multicast labels from unicast labels. For example, the multicast label space (with labels 100-500) is configured in the primary controller. The labels are in use if their Flag is 1; the labels are not in use if their Flag is 0. Table 2 describes the label information.

**Table 2**

| Label | Flag | Multicast Service ID |
|---|---|---|
| 100 | 1 | ID 1 |
| 101 | 0 | |
| ... | ... | ... |
| 230 | 1 | ID 2 |
| ... | ... | ... |
| 500 | 0 | |

Figure 4 shows a label distribution system provided in an embodiment of this invention. The system includes multicast service source 41, multicast member 42 and primary controller 40, of which primary controller 40 maintains and manages the label information table, distributes a label for the multicast service of the multicast service source from the label information table upon obtaining a request for a label from the multicast service source, and/or queries a label for multicast member 42 upon obtaining a request for querying a label from the multicast member. The label distribution system also includes forwarding controller 43, configured to obtain labels forwarded by primary controller 40, or multicast service source 41 or multicast member 42. Primary controller 40 may be deployed in the network management system (NMS) or in the main control unit (MCU) of a network element (NE), and forwarding controller 43 is located in an LSR and is configured to control forwarding of multicast services.

An embodiment of this invention also provides a method for distributing labels: The multicast service source requests a label from the primary controller, and the primary controller distributes a label for the multicast service based on the information in the label information table; after the label is distributed, the primary controller sends the label to the forwarding controller; the primary controller may also send the label to the multicast service source before the multicast service source sends the label to the forwarding controller. When a user is to join the multicast group, a query message is sent to the primary controller. If the multicast group exists, the primary controller directly notifies the forwarding controller of the label, or the user notifies the forwarding controller based on the prior distribution mechanism such as downstream distribution after learning the label to be forwarded, or the multicast service source notifies the forwarding controller based on the prior distribution mechanism such as upstream distribution. The primary controller manages labels based on the whole network. In other words, the labels used by multicast services are unique in the whole network, which ensures that no conflict occurs between labels.

The following describes the method based on the system shown in Figure 4 and the figure in detail.

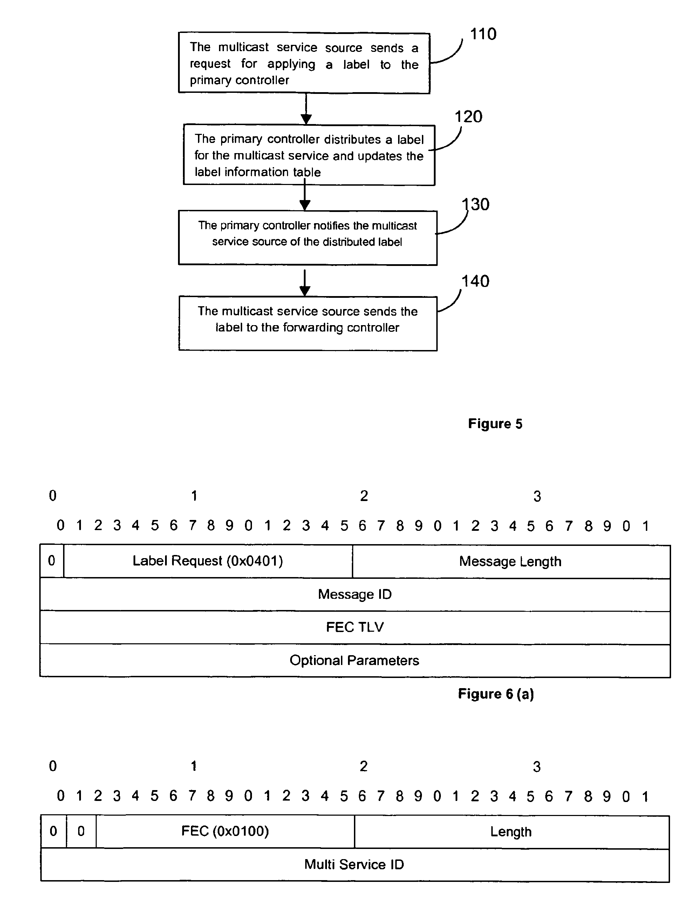

Figure 5 shows an embodiment of this invention in which the multicast service source requests a label. The specific procedure is as follows:
110: The multicast service source sends a request (containing a multicast service ID) for applying a label.

After being online, the multicast service source may register with the primary controller to request a multicast label.

120: Upon obtaining the request, the primary controller distributes a label for the multicast service and updates the label information table. Specifically:
It queries the label information table, selects an unused label and distributes it to the multicast service;
It updates the label information table, that is, adds a multicast service ID to the entry of the label and modifies the usage state flag of the label.

130: The primary controller sends a notification to the multicast service source to notify it of the distributed label.

Besides, the procedure also includes:
140: The multicast service source sends the label to the forwarding controller.

The preceding request for a label may be realized by extending the LDP signaling or other methods. The following describes the LDP signaling as an example in detail.

Figure 6 (a) shows the format of a prior LDP request, in which:
The type of the LDP request is Label Request, which is indicated by 0x0401;
Message Length (16 bits) indicates the length of the message;
Message ID (32 bits) is used to identify the message;
FEC TLV indicates the FEC of the multicast service for which a label is requested;
Optional Parameters: The length of optional parameters is variable, and optional parameters include 0 or more TLVs.

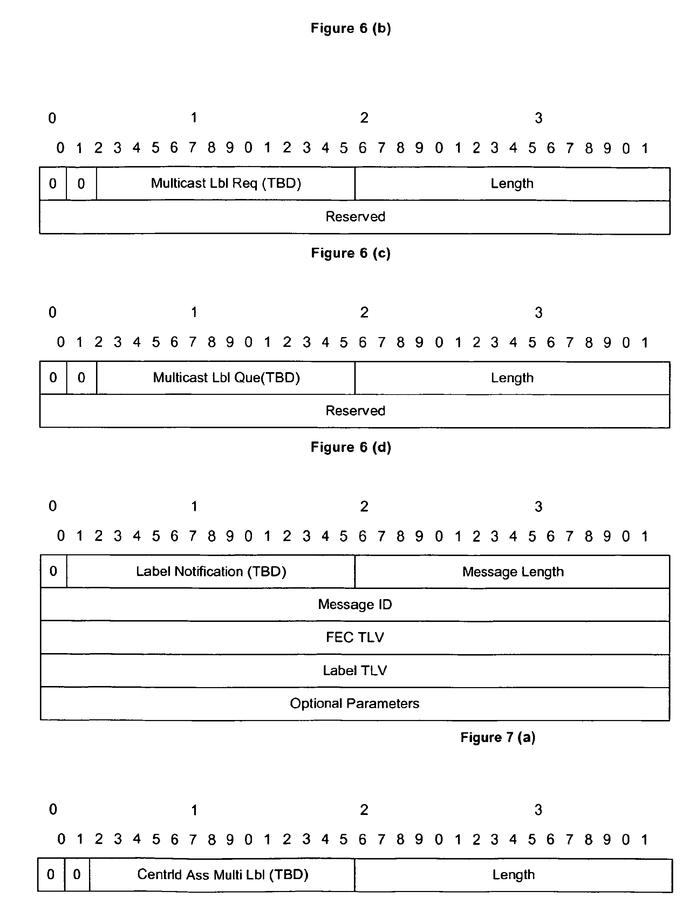

To obtain the preceding request for a label, the invention extends the format of an LDP request shown in Figure 6 (a) as follows:
(1) The FEC refers to multicast FEC, including a multicast service ID, as shown in Figure 6(b).
(2) The label request TLV is added to Optional Parameters, as shown in Figure 6 (c), indicating a request for a label to the primary controller for the corresponding multicast service.

The preceding label notification may adopt the format shown in Figure 7 (a).

The type of the message is Label Notification and its value is to be determined;

Message Length (16 bits) indicates the length of the message;

Message ID (32 bits) is used to identify the message;

FEC TLV indicates the FEC of the multicast service for which a label is requested, including a multicast service ID, in the same format as the one shown in Figure 6 (b);

Label TLV indicates a label value distributed on a centralized basis, corresponding to the FEC, as shown in Figure 7 (b);

Optional Parameters: The length of optional parameters is variable, and optional parameters include 0 or more TLVs, of which Label Request Message ID TLV must be included.

Figure 8 shows another embodiment of this invention in which the multicast service source requests a label. The specific procedure is as follows:
210-220: Same as steps 110-120 in the embodiment shown in Figure 5.
230: The primary controller sends the label to the forwarding controller.

When all members of a multicast service leave the multicast service and the multicast service source expects to remove the multicast service, the procedure for releasing the label is as follows, as shown in Figure 9:
310: The multicast service source sends a request (containing a multicast service ID) for releasing the label.
320: The primary controller releases the label and updates the label information table.
330: The primary controller sends a message indicating that the label is released to the multicast service source.

The preceding request for releasing a label may be realized by extending the LDP signaling or other methods. The following describes the LDP signaling as an example in detail based on Figure 10.

Figure 10 shows the format of an LDP request for releasing a label, in which the type of the LDP request is Label Withdraw, which is indicated by 0x0402, and FEC TLV and Label TLV are the same as those described previously (for details, see Figure 6 (b) and Figure 7(b)). Figure 11 shows the format of a label release message, in which the type of the LDP message is Label Release, which is indicated by 0x0403, and FEC TLV and Label TLV are the same as those described previously (for details, see Figure 6 (b) and Figure 7 (b)).

Figure 12 shows an embodiment of this invention in which a multicast member queries a label. The specific procedure is as follows:
410: The multicast member sends a request (containing a multicast service ID) for querying a label to the primary controller.
420: Upon obtaining the request, the primary controller queries the label information table based on the multicast service ID contained in the request.

If there is a corresponding entry in the label information table, the primary controller executes step 440; if there is no corresponding entry in the label information table, it executes step 430.
430: The primary controller distributes a label for the multicast service, updates the label information table and executes step 440.
440: The primary controller sends a notification to the multicast member, notifying it of label distribution, and executes step 450.
450: The multicast member sends the label to the forwarding controller.

In the preceding procedure, the request for querying a label shown in Figure 6 (a) is similar to the request for a label shown in Figure 6 (a) in an embodiment of this invention: The FEC TLV also contains a multicast service ID, as shown in Figure 6 (b); the optional parameters (shown in Figure 6 (d) indicating the request for querying a label are a little different from those in the request for a label. In addition, the label notification is the same as that described in the previous embodiment of this invention. See Figure 7 (a) and Figure 7 (b).

Figure 13 shows a second embodiment of this invention in which a multicast member queries a label. The specific procedure is as follows:
510-520: Same as steps 410-420 in the embodiment shown in Figure 12.

If there is a corresponding entry in the label information table, the primary controller executes step 540; if there is no corresponding entry in the label information table, it executes step 530.

530: The primary controller distributes a label for the multicast service, updates the label information table and executes step 540.

540: The primary controller sends the label to the forwarding controller.

Figure 14 shows a third embodiment of this invention in which a multicast member queries a label. The specific procedure is as follows:
610: The multicast member sends a request for querying a label to the primary controller.
620: The primary controller checks whether the multicast service exists. If not, it executes step 630; otherwise, it executes step 650.
630: The primary controller distributes a label for the multicast service and updates the label information table.
640: The primary controller notifies the multicast service source of the distributed label and executes step 660.
650: The primary controller notifies the multicast service source of sending the label.
660: The multicast service source sends the label to the forwarding controller.

In the preceding procedure, if the result of the query performed by the primary controller shows that the multicast service does not exist, and the primary controller is required to distribute a label for the multicast service, the primary controller may also directly send the label to the forwarding controller upon distributing a label for the multicast service.

The mapping between labels and multicast services may also be configured manually on the primary controller. For example, this configuration may be done through the NMS. Specifically, different labels are distributed for different multicast services on the primary controller and the label information table described in Table 3 is maintained in the primary controller, which also supports query of multicast services. If the information of multicast members is known, the primary controller may also directly send the label used by the multicast service to the forwarding controller.

**Table 3**

| Multicast Service ID | Label |
|---|---|
| ID 1 | 100 |
| ID 2 | 101 |
| ... | ... |
| ID 501 | 500 |

To effectively avoid label conflicts during distribution of labels for multicast services, an embodiment of this invention also provides an apparatus for distributing labels in multicast services. The apparatus is configured to maintain the label information table and distribute labels for multicast services as required by the multicast service source. The apparatus provided in an embodiment of this invention may serve as the primary controller shown in the embodiment of this invention in Figure 4.

As shown in Figure 15, the apparatus provided in an embodiment of this invention includes message interaction unit 151, information maintenance unit 153 and label distribution unit 154. Message interaction unit 151 interacts with the multicast service source or multicast members in the network; information maintenance unit 153 is configured to maintain and manage the label information table; label distribution unit 154 is configured to select an unused label from the label information table and distribute it to the multicast service upon obtaining a request for a label from the multicast service source; it also delivers the distributed label to message interaction unit 151 for sending and notifies information maintenance unit 153 of updating the label information table.

To enable new multicast members to obtain the label of a multicast service, label query unit 152 is also deployed in the apparatus. It is configured to query the label information table when message interaction unit 151 obtains a request for querying a label from a multicast member. If the label corresponding to the multicast service ID in the request is found, label query unit 152 delivers the label to message interaction unit 151 for sending; if the label is not found, label query unit 152 notifies label distribution unit 154 of distributing a label for the multicast service.

The apparatus provided in an embodiment of this invention also includes label release unit 155, which is configured to release the label corresponding to the multicast service ID and notify information maintenance unit 153 of updating the label information table when message interaction unit 151 obtains a request for releasing a label from the multicast service source.

Although the invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for distributing labels, comprises the steps of:
obtaining, by a primary controller, a request containing a multicast service ID for applying a label from a multicast service source, the primary controller is deployed in a network to manage the label space on a centralized basis;
querying, by the primary controller, a label information table which the primary controller maintains;
distributing, by the primary controller, an unused label for a multicast service; and
updating, by the primary controller, the label information table.

2. The method of claim 1, further comprising:
sending, by the primary controller, a notification carrying the label to the multicast service source; and
sending, by the multicast service source, the label to a forwarding controller.

3. The method of claim 1, further comprising:
sending, the primary controller, the label to a forwarding controller.

4. The method of claim 1, further comprising:
obtaining, by the primary controller, the label of the multicast service when a multicast member joins the multicast service.

5. The method of claim 4, wherein the procedure for obtaining the label of the multicast service by the primary controller comprises:
sending, by the multicast member, a request carrying a multicast service ID for querying the label to the primary controller;
querying, by the primary controller, the label information table based on the multicast service ID upon obtaining the request; and
obtaining, by the primary controller, the label corresponding to the multicast service ID.

6. The method of claim 5, further comprising:
sending, by the primary controller, the label to the forwarding controller.

7. The method of claim 5, further comprising:
sending, by the primary controller, a notification carrying the label to the multicast member; and
sending, by the multicast member, the label to the forwarding controller.

8. The method of claim 5, further comprising:
sending, by the multicast service source, the label to the forwarding controller upon obtaining a notification from the primary controller.

9. The method of any of claim 1 to claim 5, further comprising:
obtaining, by the primary controller, a request carrying a multicast service ID for releasing the label from the multicast service source;
releasing, by the primary controller, the label corresponding to the multicast service ID;
updating, by the primary controller, the label information table; and
sending, by the primary controller, a message indicating that the label is released to the multicast service source.

10. The method of claim 1, wherein the label information table comprises labels, flags indicating usage states of the labels and multicast service IDs, and the flag is used to differentiate used labels from unused labels.

11. The method of claim 1, wherein:
distributing, by the primary controller, different labels for different multicast services in the whole network.

12. The method of claim 5, wherein the procedure for querying, by the primary controller, the label information table based on the multicast service ID upon obtaining the request comprises:
distributing, by the primary controller a label for the multicast service if the multicast service ID does not exist in the label information table; and
updating, by the primary controller, the label information table.

13. An apparatus for distributing labels, the apparatus is deployed in a network to manage a label space on a centralized basis, said apparatus comprising:
a message interaction unit(151), configured to obtain a request containing a multicast service ID for applying a label from a multicast service source;
an information maintenance unit(153), configured to maintain and manage a label information table; and
a label distribution unit(154), configured to select an unused label from the label information table, distribute the unused label to a multicast service, send the distributed label to the message interaction unit(151), and send a notification for updating the label information table to the information maintenance unit(153).

14. The apparatus of claim 13, further comprising:
the message interaction unit(151), configured to obtain a request carrying a multicast service ID for querying a label from a multicast member; and
a label query unit(152), configured to query the label information table, send a label to the message interaction unit(151) if the label corresponding to the multicast service ID is found, and send a notification for distributing a new label to the label distribution unit(154) if a label is not found.

15. The apparatus of claim 13, further comprising:
the message interaction unit(151), configured to obtain a request carrying a multicast service ID for releasing a label from the multicast service source; and
a label release unit(155), configured to release a label corresponding to the multicast service ID, and send a notification for updating the label information table to the information maintenance unit(153).

## Patentansprüche

1. Verfahren zum Verteilen von Labels, das die folgenden Schritte umfasst:
eine primäre Steuerung erhält eine Anforderung, die eine Multicast-Dienst-ID enthält, ein Label anzuwenden, von einer Multicast-Dienstquelle, wobei die primäre Steuerung in einem Netzwerk verwendet wird, um den Label-Raum auf zentralisierter Basis zu verwalten;
die primäre Steuerung fragt eine Label-Informationstabelle ab, die die primäre Steuerung führt;
die primäre Steuerung verteilt ein unbenutztes Label für einen Multicast-Dienst; und
die primäre Steuerung aktualisiert die Label-Informationstabelle.

2. Verfahren nach Anspruch 1, ferner mit den folgenden Schritten:
die primäre Steuerung sendet eine Benachrichtigung, die das Label trägt, zu der Multicast-Dienstquelle; und
die Multicast-Dienstquelle sendet das Label zu einer Weiterleitungssteuerung.

3. Verfahren nach Anspruch 1, ferner mit dem folgenden Schritt:
die primäre Steuerung sendet das Label zu einer Weiterleitungssteuerung.

4. Verfahren nach Anspruch 1, ferner mit dem folgenden Schritt:
die primäre Steuerung erhält das Label des Multicast-Diensts, wenn sich ein Multicast-Mitglied dem Multicast-Dienst anschließt.

5. Verfahren nach Anspruch 4, wobei die Prozedur zum Erhalten des Labels des Multicast-Diensts durch die primäre Steuerung Folgendes umfasst:
das Multicast-Mitglied sendet eine Anforderung, die eine Multicast-Dienst-ID trägt,
das Label abzufragen, zu der primären Steuerung;
die primäre Steuerung fragt auf den Erhalt der Anforderung hin die Label-Informationstabelle auf der Basis der Multicast-Dienst-ID ab; und
die primäre Steuerung erhält das Label, das der Multicast-Dienst-ID entspricht.

6. Verfahren nach Anspruch 5, ferner mit dem folgenden Schritt:
die primäre Steuerung sendet das Label zu der Weiterleitungssteuerung.

7. Verfahren nach Anspruch 5, ferner mit den folgenden Schritten:
die primäre Steuerung sendet eine Benachrichtigung, die das Label trägt, zu dem Multicast-Mitglied; und
das Multicast-Mitglied sendet das Label zu der Weiterleitungssteuerung.

8. Verfahren nach Anspruch 5, ferner mit dem folgenden Schritt:
die Multicast-Dienstquelle sendet auf den Erhalt einer Benachrichtigung von der primären Steuerung hin das Label zu der Weiterleitungssteuerung.

9. Verfahren nach einem der Ansprüche 1 bis 5, ferner mit den folgenden Schritten:
die primäre Steuerung erhält eine Anforderung, die eine Multicast-Dienst-ID trägt,
das Label freizugeben, von der Multicast-Dienstquelle;
die primäre Steuerung gibt das Label, das der Multicast-Dienst-ID entspricht, frei;
die primäre Steuerung aktualisiert die Label-Informationstabelle; und
die primäre Steuerung sendet eine Nachricht, die angibt, dass das Label freigegeben ist, zu der Multicast-Dienstquelle.

10. Verfahren nach Anspruch 1, wobei die Label-Informationstabelle Labels, Flags, die Benutzungszustände der Labels angeben, und Multicast-Dienst-IDs umfasst und das Flag verwendet wird, um benutzte Labels von unbenutzten Labels zu unterscheiden.

11. Verfahren nach Anspruch 1, wobei
die primäre Steuerung verschiedene Labels für verschiedene Multicast-Dienste in dem gesamten Netzwerk verteilt.

12. Verfahren nach Anspruch 5, wobei die Prozedur zum Abfragen der Label-Informationstabelle durch die primäre Steuerung auf der Basis der Multicast-Dienst-ID auf den Erhalt der Anforderung hin Folgendes umfasst:
die primäre Steuerung verteilt ein Label für den Multicast-Dienst, wenn die Multicast-Dienst-ID in der Label-Informationstabelle nicht existiert; und
die primäre Steuerung aktualisiert die Label-Informationstabelle.

13. Vorrichtung zum Verteilen von Labels, wobei die Vorrichtung in einem Netzwerk verwendet wird, um einen Label-Raum auf zentralisierter Basis zu verwalten, wobei die Vorrichtung Folgendes umfasst:
eine Nachrichteninteraktionseinheit (151), die dafür ausgelegt ist, eine Anforderung,
die eine Multicast-Dienst-ID enthält, ein Label anzuwenden, von einer Multicast-Dienstquelle zu erhalten;
eine Informationsführungseinheit (153), die dafür ausgelegt ist, eine Label-Informationstabelle zu führen und zu verwalten; und
eine Label-Verteilungseinheit (154), die dafür ausgelegt ist, ein unbenutztes Label aus der Label-Informationstabelle auszuwählen, das unbenutzte Label an einen Multicast-Dienst zu verteilen, das verteilte Label zu der Nachrichteninteraktionseinheit (151) zu senden und eine Benachrichtigung zum Aktualisieren der Label-Informationstabelle zu der Informationsführungseinheit (153) zu senden.

14. Vorrichtung nach Anspruch 13, ferner umfassend:
eine Nachrichteninteraktionseinheit (151), die dafür ausgelegt ist, eine Anforderung,
die eine Multicast-Dienst-ID trägt, ein Label abzufragen, von einem Multicast-Mitglied zu erhalten; und
eine Label-Abfrageeinheit (152), die dafür ausgelegt ist, die Label-Informationstabelle abzufragen, ein Label zu der Nachrichteninteraktionseinheit (151) zu senden,
wenn das Label, das der Multicast-Dienst-ID entspricht, gefunden wird, und eine Benachrichtigung zum Verteilen eines neuen Labels zu der Label-Verteilungseinheit (154) zu senden, wenn ein Label nicht gefunden wird.

15. Vorrichtung nach Anspruch 13, ferner umfassend:
die Nachrichteninteraktionseinheit (151), die dafür ausgelegt ist, eine Anforderung,
die eine Multicast-Dienst-ID trägt, ein Label freizugeben, von der Multicast-Dienstquelle zu erhalten; und
eine Label-Freigabeeinheit (155), die dafür ausgelegt ist, ein Label, das der Multicast-Dienst-ID entspricht, freizugeben und eine Benachrichtigung zum Aktualisieren der Label-Informationstabelle zu der Informationsführungseinheit (153) zu senden.

## Revendications

1. Procédé de distribution d'étiquettes, comprenant les étapes suivantes :
l'obtention, par un contrôleur principal, d'une demande contenant un ID de service de multidiffusion afin d'appliquer une étiquette provenant d'une source de service de multidiffusion, le contrôleur principal étant déployé dans un réseau pour gérer l'espace d'étiquettes de manière centralisée ;
l'interrogation, par le contrôleur principal, d'une table d'informations d'étiquettes que le contrôleur principal tient à jour ;
la distribution, par le contrôleur principal, d'une étiquette inutilisée pour un service de multidiffusion ; et
l'actualisation, par le contrôleur principal, de la table d'informations d'étiquettes.

2. Procédé selon la revendication 1, comprenant en outre :
l'envoi à la source de service de multidiffusion, par le contrôleur principal, d'une notification portant l'étiquette ; et
l'envoi de l'étiquette à un contrôleur de réacheminement, par la source de service de multidiffusion.

3. Procédé selon la revendication 1, comprenant en outre :
l'envoi de l'étiquette à un contrôleur de réacheminement, par le contrôleur principal.

4. Procédé selon la revendication 1, comprenant en outre :
l'obtention, par le contrôleur principal, de l'étiquette du service de multidiffusion quand un membre de la multidiffusion se joint au service de multidiffusion.

5. Procédé selon la revendication 4, dans lequel la procédure d'obtention de l'étiquette du service de multidiffusion par le contrôleur principal comprend :
l'envoi au contrôleur principal, par le membre de la multidiffusion, d'une demande portant un ID de service de multidiffusion afin d'interroger l'étiquette ;
l'interrogation, par le contrôleur principal, de la table d'informations d'étiquettes en fonction de l'ID de service de multidiffusion à l'obtention de la demande ; et
l'obtention, par le contrôleur principal, de l'étiquette correspondant à l'ID de service de multidiffusion.

6. Procédé selon la revendication 5, comprenant en outre :
l'envoi de l'étiquette au contrôleur de réacheminement, par le contrôleur principal.

7. Procédé selon la revendication 5, comprenant en outre :
l'envoi, par le contrôleur principal, d'une notification portant l'étiquette au membre de la multidiffusion ; et
l'envoi de l'étiquette au contrôleur de réacheminement, par le membre de la multidiffusion.

8. Procédé selon la revendication 5, comprenant en outre :
l'envoi de l'étiquette au contrôleur de réacheminement, par la source de service de multidiffusion, à l'obtention d'une notification par le contrôleur principal.

9. Procédé selon l'une quelconque des revendications 1 à 5, comprenant en outre :
l'obtention, par le contrôleur principal, d'une demande portant un ID de service de multidiffusion pour délivrer l'étiquette depuis la source de service de multidiffusion ;
la délivrance, par le contrôleur principal, de l'étiquette correspondant à l'ID de service de multidiffusion ;
l'actualisation, par le contrôleur principal, de la table d'informations d'étiquettes ; et
l'envoi à la source de service de multidiffusion, par le contrôleur principal, d'un message indiquant que l'étiquette est délivrée.

10. Procédé selon la revendication 1, dans lequel la table d'informations d'étiquettes comprend des étiquettes, des fanions indiquant des états d'utilisation des étiquettes et des ID de service de multidiffusion, et le fanion est utilisé pour différencier les étiquettes utilisées des étiquettes inutilisées.

11. Procédé selon la revendication 1, comprenant :
la distribution, par le contrôleur principal, d'étiquettes différentes pour des services de multidiffusion différents dans l'ensemble du réseau.

12. Procédé selon la revendication 5, dans lequel la procédure d'interrogation, par le contrôleur principal, de la table d'informations d'étiquettes en fonction de l'ID de service de multidiffusion à l'obtention de la demande comprend :
la distribution, par le contrôleur principal, d'une étiquette pour le service de multidiffusion si l'ID de service de multidiffusion n'existe pas dans la table d'informations d'étiquettes ; et
l'actualisation, par le contrôleur principal, de la table d'informations d'étiquettes.

13. Appareil de distribution d'étiquettes, l'appareil étant déployé dans un réseau pour gérer un espace d'étiquettes de manière centralisée, ledit appareil comprenant :
une unité d'interaction de message (151), configurée pour obtenir une demande contenant un ID de service de multidiffusion afin d'appliquer une étiquette provenant d'une source de service de multidiffusion ;
une unité de tenue à jour d'informations (153), configurée pour tenir à jour et gérer une table d'informations d'étiquettes ;
une unité de distribution d'étiquette (154), configurée pour sélectionner une étiquette inutilisée dans la table d'informations d'étiquettes, distribuer l'étiquette inutilisée à un service de multidiffusion, envoyer l'étiquette distribuée à l'unité d'interaction de message (151), et envoyer à l'unité de tenue à jour d'informations (153) une notification pour actualiser la table d'informations d'étiquettes.

14. Appareil selon la revendication 13, comprenant en outre :
l'unité d'interaction de message (151), configurée pour obtenir une demande portant un ID de service de multidiffusion pour interroger une étiquette provenant d'un membre à multidiffusion ; et
une unité d'interrogation d'étiquette (152), configurée pour interroger la table d'informations d'étiquettes, envoyer une étiquette à l'unité d'interaction de message (151) si l'étiquette correspondant à l'ID de service de multidiffusion est trouvée, et envoyer une notification de distribution d'une nouvelle étiquette à l'unité de distribution d'étiquette (154) si une étiquette n'est pas trouvée.

15. Appareil selon la revendication 13, comprenant en outre :
l'unité d'interaction de message (151), configurée pour obtenir une demande portant un ID de service de multidiffusion pour délivrer une étiquette depuis la source de service de multidiffusion ; et
une unité de délivrance d'étiquette (155), configurée pour libérer une étiquette correspondant à l'ID de service de multidiffusion, et envoyer une notification d'actualisation de la table d'informations d'étiquettes à l'unité de tenue à jour d'informations (153).
